## Europäisches Patentamt
## European Patent Office
## Office européen des brevets

(19)

(11) Veröffentlichungsnummer : **0 053 294**
**B1**

(12) **EUROPÄISCHE PATENTSCHRIFT**

(45) Veröffentlichungstag der Patentschrift :
**02.05.84**

(21) Anmeldenummer : **81109334.3**

(22) Anmeldetag : **30.10.81**

(51) Int. Cl.³ : **B 60 L 1/10, H 02 M 7/00**

(54) **Energieversorgungsanlage für einen Reisezugwagen.**

(30) Priorität : **27.11.80 DE 3044634**

(43) Veröffentlichungstag der Anmeldung :
**09.06.82 Patentblatt 82/23**

(45) Bekanntmachung des Hinweises auf die Patenterteilung : **02.05.84 Patentblatt 84/18**

(84) Benannte Vertragsstaaten :
**AT BE CH DE FR IT LI LU NL**

(56) Entgegenhaltungen :
**THE RAILWAY GAZETTE, Band 123, 1. Dezember 1967, LONDON (GB) "Prototype four-system electrics for the DB", Seiten 889-893**

(73) Patentinhaber : **Fried. Krupp Gesellschaft mit beschränkter Haftung**
**Altendorfer Strasse 103**
**D-4300 Essen 1 (DE)**

(72) Erfinder : **Seeger, Herbert**
**Langeoogweg 1**
**D-4300 Essen 1 (DE)**

## Energieversorgungsanlage für einen Reisezugwagen

Die Erfindung betrifft eine Einrichtung zur Energieversorgung von Nutzverbrauchern in einem Eisenbahnfahrzeug aus Bahnnetzen, die Wechselspannungen unterschiedlicher Höhe und Frequenz oder Gleichspannungen von 1,5 kV oder 3 kV führen, mit einem bei Gleichspannungseinspeisung betriebenen Thyristor-Wechselrichter, der einen Transformator enthält, über den die Nutzverbraucher bei Wechselspannungseinspeisung direkt gespeist werden und dessen Wicklungen umschaltbar sind, so daß eine Einstellung des Übersetzungsverhältnisses des Transformators je nach unterschiedlicher Höhe der anstehenden Gleichspannung, der Wechselspannung sowie der Frequenz auf jeweils konstante Ausgangsspannung für die unterschiedlichen Nutzverbraucher ermöglicht wird.

Bei einer bekannten Engergieversorgungseinrichtung (DE-B2-21 24 390) besitzt der Wechselrichter einen Taktgeber, der bei Gleichspannungseinspeisung von 1,5 kV und 3 kV jeweils die gleiche Taktfrequenz besitzt. Dabei ist nachteilig, daß die Primärwicklungslänge des Transformators für 1,5 kV und 3 kV ausgelegt sein muß (doppelte Länge). Außerdem muß der Transformatorkern entsprechend für 3 kV ausgelegt sein.

Der Erfindung liegt die Aufgabe zugrunde, eine Energieversorgungsanlage zu schaffen, die wenig Gewicht besitzt und wenig Platz benötigt.

Die Aufgabe wird bei einer Energieversorgungsanlage der eingangs genannten Art erfindungsgemäß dadurch gelöst, daß bei Umschaltung der Gleichspannungseinspeisung von 1,5 auf 3 kV bei gleichbleibender Primärwicklung der zum Einsatz kommende Sekundärwicklungsteil halbiert wird und daß der Thyristor-Wechselrichter einen Taktgeber aufweist, dessen Impulsfrequenz einstellbar ist, wobei bei Gleichspannungseinspeisung von 1,5 kV die Impulsfrequenz wenigstens 50 Hz beträgt und bei Gleichspannungseinspeisung von 3 kV die Impulsfrequenz dem gegenüber verdoppelt ist. Dadurch wird insbesondere erreicht, daß durch diese Frequenzverdopplung die Länge der Primärwicklung und der Querschnitt des Eisenkerns des Transformators nur für 1,5 kV ausgelegt zu werden braucht. Dadurch können etwa 25 % des Gewichts und dadurch viel Energie (Strom) für den Zugverkehr eingespart werden.

Ein Ausführungsbeispiel der Erfindung ist in der Zeichnung dargestellt und wird im folgenden näher beschrieben.

Es zeigen :

Figur 1 einen Wirkschaltplan einer Energieversorgungsanlage und

Figuren 2 bis 5 den Wirkschaltplan gemäß Fig. 1 bei Anliegen der jeweils maßgebenden Sammelleitungsspannung (3 kV, 1,5 kV Gleichspannung und 1,5 kV/50 Hz, 1 kV/16 2/3 Hz Wechselspannung), wobei jeweils die Teile weggelassen sind, die bei der betreffenden Spannung nicht zum Einsatz kommen.

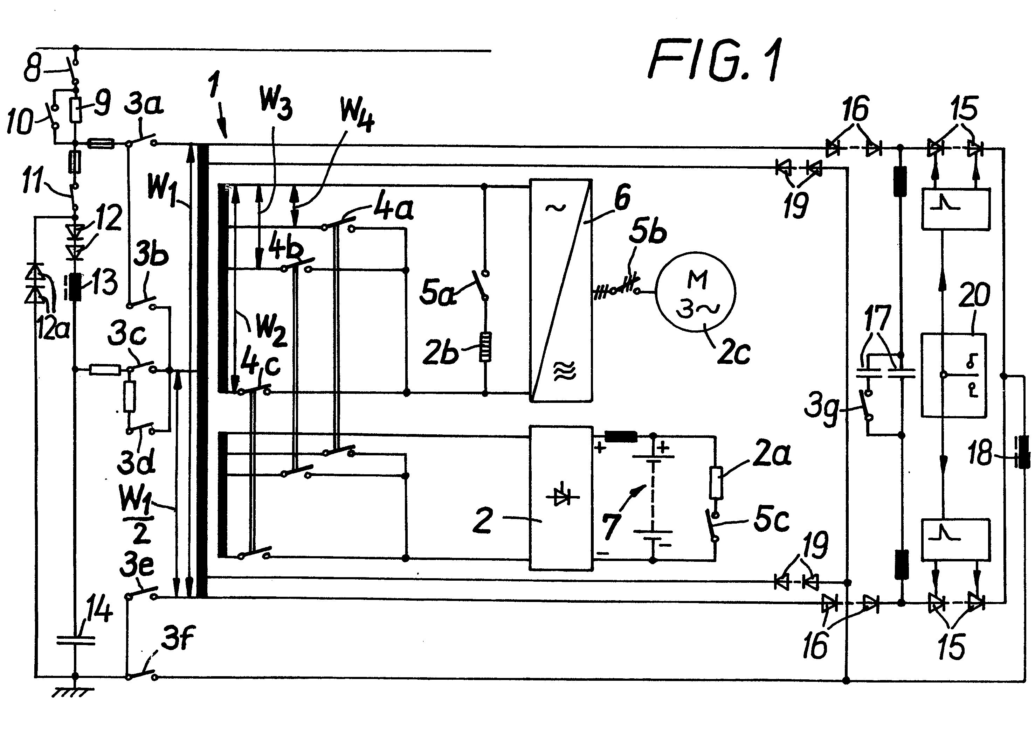

Gemäß Fig. 1 weist die Energieversorgungseinrichtung einen Transformator 1 sowohl für die Energieversorgung von ruhenden Nutzverbrauchern, z. B. Batterieladegerät 2, Gleichstromverbraucher 2a und Wechselstromverbraucher 2b, als auch für die Energieversorgung von rotatorischen Verbrauchern, z. B. Kompressoren (2c), auf.

Der Transformator 1 besitzt eine Primärwicklung W1 mit einer Wicklungsmittenanzapfung und zwei Sekundärwicklungen mit Wicklungsanzapfungen. Den beiden primärseitigen Wicklungsenden und der Wicklungsmittenanzapfung sind Kontakte 3a, 3b, 3c, 3d, 3e (Schalter oder Schütze) und den sekundärseitigen Wicklungsanzapfungen sind zweipolige Kontakte 4a, 4b, 4c (Schalter oder Schütze) zugeordnet. Der Transformator 1 dient bei Gleichspannungseinspeisung als Wechselrichtertransformator und bei Wechselspannungseinrichtung als Isoliertransformator. Damit die Nutzverbraucher mit ihrer Nennspannung versorgt werden, werden die Kontakte 3a, 3b, 3d, 3e, 3f, 4a, 4b, 4c, wie weiter unten beschrieben, entsprechend geschlossen, wodurch das Windungsverhältnis des Transformators 1 der jeweiligen Eingangsspannung angepaßt wird.

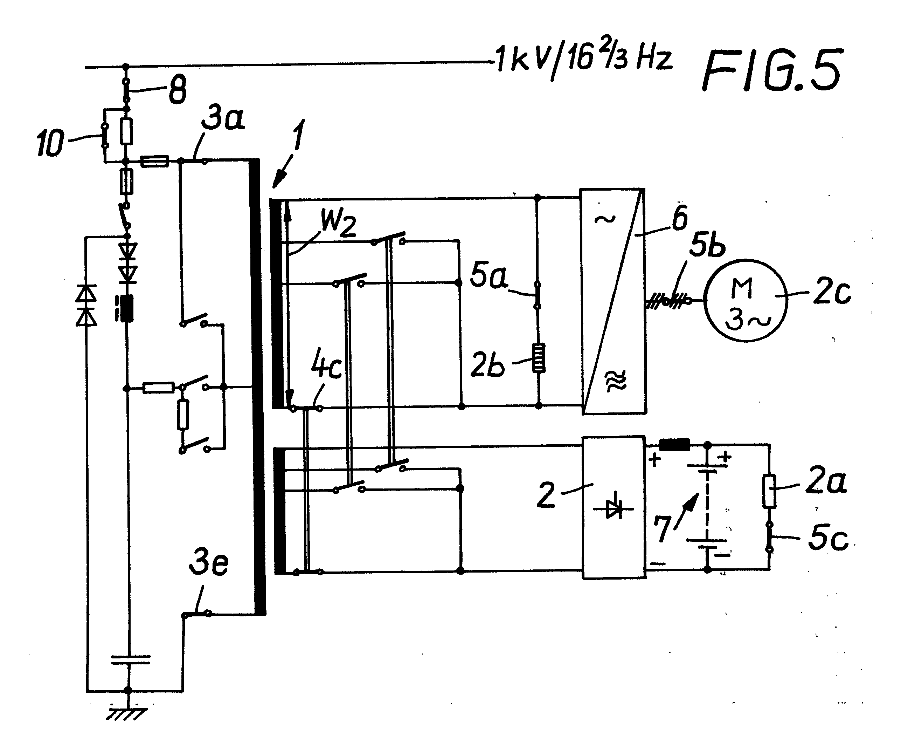

Bei Wechselspannungseinspeisung von 1 kV/16 2/3 Hz sind gemäß Fig. 5 die Schalter 3a, 3e, 4c sowie die den Nutzverbrauchern vorgeordneten Schalter 5a, 5b, 5c geschlossen. Die gesamte Primärwicklung und die beiden Sekundärwicklungen des Transformators 1 kommen zum Einsatz.

Gemäß Fig. 5 sind an der oben dargestellten Sekundärwicklung ein Heizwiderstand (2b) und ein Drehstrommotor (2c) über einen Wechselstrom-Drehstrom-Umrichter-Spannungskonstanthalter 6 angeschlossen. An der unten dargestellten Sekundärwicklung ist das Batterieladegerät 2 mit einem Akkumulator 7 und an dem Akkumulator 7 ist ein Gleichstromverbraucher 2a angeschlossen. Alle diese Nutzverbraucher werden mit ihrer Stromart und Nennspannung versorgt.

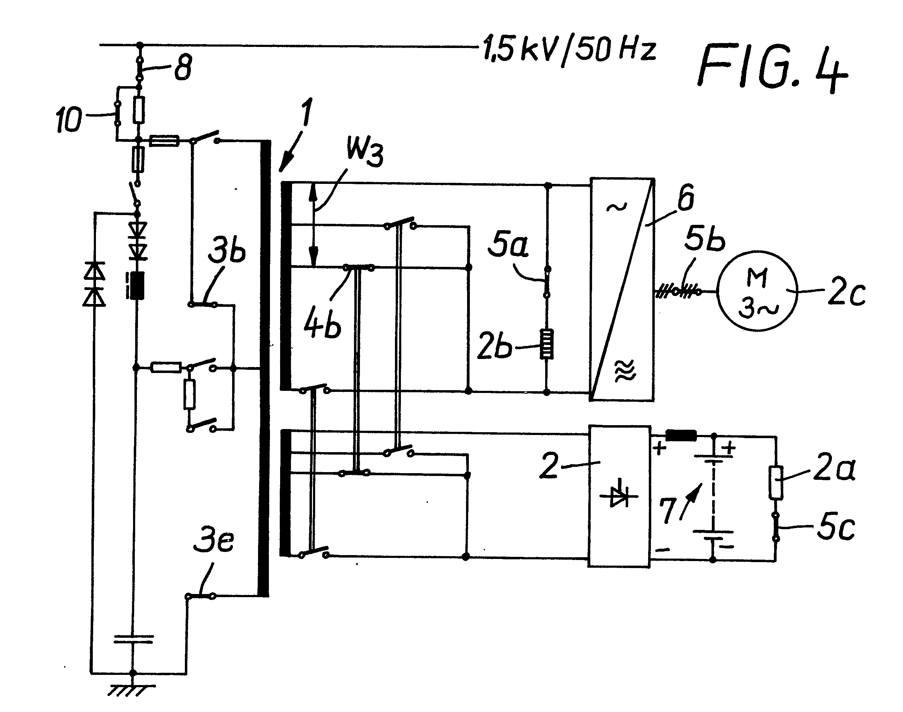

Bei Wechselspannungseinspeisung von 1,5 kV/50 Hz sind gemäß Fig. 4 die Schalter 3b, 3e, 5a, 5b, 5c geschlossen. Um die Nutzverbraucher mit ihrer Nennspannung zu versorgen, ist nicht mehr die gesamte Wicklung des Transformators 1 erforderlich. Es kommt nur die halbe Primärwicklung und nur ein Teil der jeweiligen Sekundärwicklungen (etwa 1/3 $W_2$) zum Einsatz.

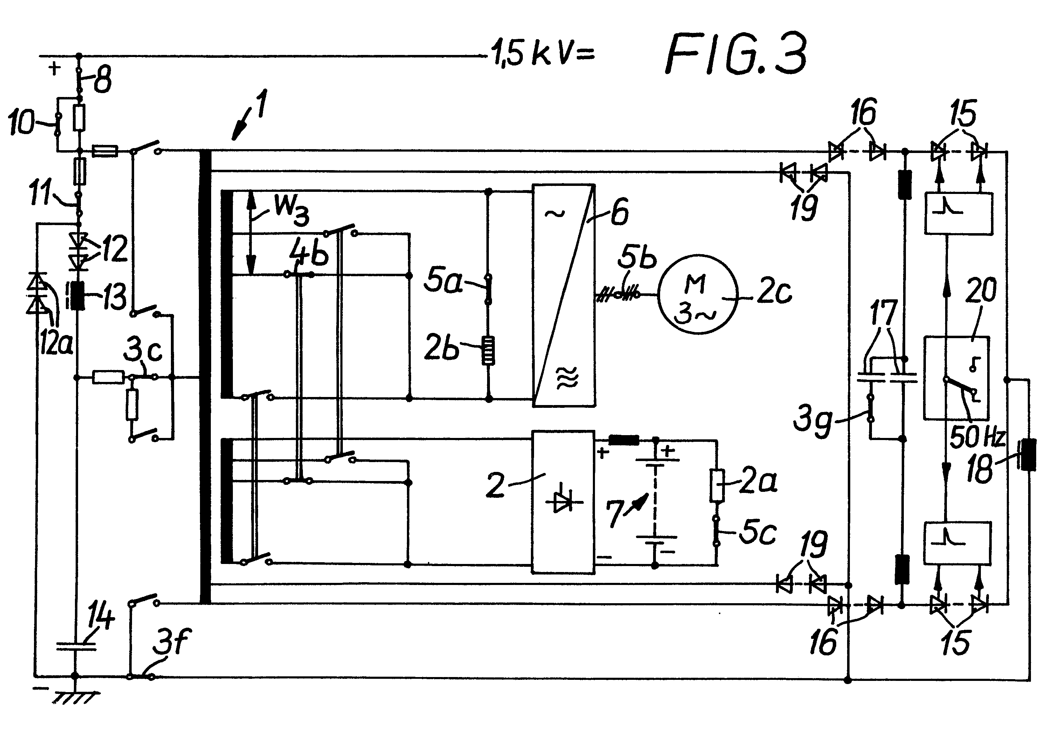

Bei Gleichspannungseinspeisung von 1,5 kV dient der Transformator 1 gemäß Fig. 3 als Wechselrichtertransformator. Es kommt die gesamte Primärwicklung und nur ein Teil $W_3$ der jeweiligen Sekundärwicklungen (etwa 1/3 $W_2$) zum Einsatz. Die Wechselrichterfrequenz beträgt 50 Hz.

Die Schalter 3c, 3f, 4b, 5a, 5b, 5c sind geschlossen.

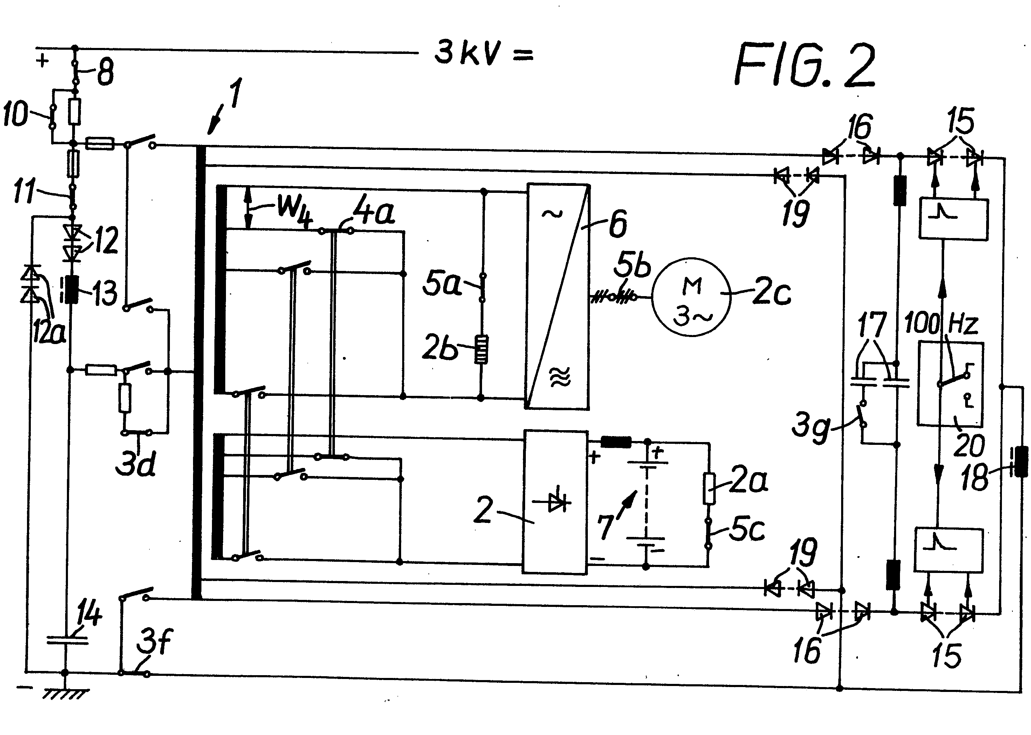

Bei Gleichspannungseinspeisung von 3 kV dient der Transformator 1 gemäß Fig. 2 als Wechselrichterwicklung und nur ein Teil $W_4$ der jeweiligen Sekundärwicklungen (etwa 1/6 $W_2$) kommt zum Einsatz. Die Wechselrichterfrequenz beträgt 100 Hz. Die Schalter 3d, 3f, 4a, 5a, 5b, 5c sind geschlossen.

Durch die Erhöhung der Wechselrichterfrequenz auf 100 Hz wird erreicht, daß der Transformatorkern kleiner ausgelegt werden kann. Außerdem braucht nur die gleiche Primärwicklung wie bei 1,5 kV Gleichspannung verwendet zu werden. Dadurch benötigt man nur die Hälfte der Länge der sonst bei 3 kV/50 Hz benötigten Primärwicklung.

Gemäß Fig. 1 besitzt die Energieversorgungsanlage einen Hauptschalter 8, mit dem sie in Betrieb genommen werden kann. Dem Hauptschalter 8 ist ein Anlaufwiderstand 9 nachgeschaltet und dem Anlaufwiderstand 9 ist ein Schließer 10 parallel geschaltet. Dem Anlaufwiderstand 9 sind zueinander in Reihe ein Gleichstromschließer 11, Dioden 12, eine Glättungsdrossel 13 und ein Stützkondensator 14 geschaltet. Der Stützkondensator 14 ist mit der Masse verbunden. Parallel zu den Dioden 12, der Glättungsdrossel 13 und dem Stützkondensator 14 sind weitere Dioden 12a geschaltet. Die letztgenannten Dioden 12a dienen bei kurzzeitigem Netzausfall als Stromführung für die Glättungsdrossel 13, damit sich an dieser Glättungsdrossel 13 keine hohe Induktionsspannung bilden kann. Die erstgenannten Dioden 12 verhindern, daß der Stützkondensator 14 sich nicht bei Netzspannungseinbruch über das Netz entlädt. Der Stützkondensator 14 dient bei kurzzeitigem Netzausfall als Energiequelle. Parallel zu dem Stützkondensator 14 befindet sich der Gleichstromeingang eines Wechselrichters in Mittelpunktschaltung der Energieversorgungseinrichtung. Der Wechselrichter besitzt zwei parallel zueinander angeordnete Thyristorengruppen 15 und Sperrdiodengruppen 16. Im Thyristoren-Sperrdioden-Diagonalzweig sind zwei Kommutierungskondensatoren 17 angeordnet. Außerdem besitzt der Wechselrichter eine Kommuierungsdrossel 18, Blindstromdioden 19 und einen Taktgeber 20, dessen Impulsfrequenz einstellbar ist.

Gemäß Fig. 2 ist der Pluspol des elektrischen Netzes über den Hauptschalter 8, den Schließer 10, den Gleichstromschließer 11, die Dioden 12, die Glättungsdrossel 13 und den Schalter 3d zur Mittelanzapfung der Primärwicklung des Transformators 1 geführt. An den Enden der Primärwicklung des Transformators 1 sind jeweils eine Sperrdiode 16 mit ihrer Anode angeschlossen. In Reihe zu diesen beiden Sperrdioden 16 sind jeweils weitere Sperrdioden 16 und mehrere Thyristoren 15 geschaltet. Die Kathoden der letztgeschalteten Thyristoren 15 sind miteinander und mit der Kommutierungsdrossel 18 verbunden. Die Kommutierungsdrossel 18 ist mit ihrem anderen Pol über den Schalter 3f mit dem Minuspol des elektrischen Netzes verbunden. Die Thyristoren 15 stehen mit dem Taktgeber 20 in Verbindung, der die Thyristoren 15 so ansteuert, daß der Transformator 1 eine Wechselspannung abgibt, die eine Frequenz von 100 Hz besitzt. Die Thyristoren 15, die jeweils zueinander in Reihe liegen, werden mit einer Taktfrequenz von 50 Hz je Ausgang angesteuert, wobei die beiden Gruppen von Thyristoren 15 um den elektrischen Winkel von 180° verschoben angesteuert werden. Die frequenzunabhängigen Verbraucher werden mit ihrer Nennspannung versorgt. Die frequenzabhängigen Verbraucher werden dagegen mit ihrer Nennspannung und Nennfrequenz versorgt.

Gemäß Fig. 3 ist der Pluspol des elektrischen Netzes über den Hauptschalter 8, den Schließer 10, den Gleichstromschließer 11, die Dioden 12, die Glättungsdrossel 13 und den Schalter 3c zur Mittenanzapfung der Primärwicklung des Transformators 1 geführt. Der Wechselrichter ist nahezu genauso geschaltet wie es in Fig. 2 dargestellt ist. Die Höhe der Kapazität des Kommutierungskondensators ist nun größer, und der Taktgeber 20 gibt nun ein Signal mit einer Taktfrequenz von 50 Hz ab. Durch die sekundärseitige Wicklungsumschaltung des Transformators 1 werden die Verbraucher mit ihrer Nennspannung bzw. Nennspannung und Nennfrequenz versorgt.

Gemäß Fig. 4 werden die Verbraucher über den Transformator 1 (halbe Primärwicklung) mit ihrer Nennspannung bzw. Nennspannung und Nennfrequenz versorgt.

Gemäß Fig. 5 werden die Verbraucher über den Transformator 1 (gesamte Primär- und Sekundärwicklung bzw. Sekundärwicklungen) mit ihrer Nennspannung bzw. Nennspannung und Nennfrequenz versorgt.

Bei Wechselspannungseinspeisung wird lediglich der Transformator 1 des Wechselrichters benötigt.

**Anspruch**

Einrichtung zur Energieversorgung von Nutzverbrauchern (2, 2a, 2b, 2c) in einem Eisenbahnfahrzeug aus Bahnnetzen, die Wechselspannungen unterschiedlicher Höhe und Frequenz oder Gleichspannungen von 1,5 kV oder 3 kV führen, mit einem bei Gleichspannungseinspeisung betriebenen Thyristor-Wechselrichter (15, 16, 17, 18, 19), der einen Transformator (1) enthält, über den die Nutzverbraucher bei Wechselspannungseinspeisung direkt gespeist werden und dessen Wicklungen umschaltbar sind, so daß eine Einstellung des Übersetzungsverhältnisses des Transformators je nach unterschiedliche Höhe der anstehenden Gleichspannung, der Wechselspannung sowie der Frequenz auf jeweils konstante Ausgangsspannung ·für die unterschiedlichen Nutzverbraucher ermöglicht wird, dadurch gekennzeichnet, daß bei Umschaltung der Gleichspannungseinspeisung von 1,5 auf 3 KV bei gleichbleibender Primärwicklung ($W_1$) der zum Einsatz kommende Sekundärwicklungsteil

(W$_3$ bzw. W$_4$) halbiert wird und daß der Thyristor-Wechselrichter einen Taktgeber (20) aufweist, dessen Impulsfrequenz einstellbar ist, wobei bei Gleichspannungseinspeisung von 1,5 kV die Impulsfrequenz wenigstens 50 Hz beträgt und bei Gleichspannungseinspeisung von 3 kV die Impulsfrequenz dem gegenüber verdoppelt ist.

## Claim

Device to supply power to consumers (2, 2a, 2b, 2c) in a passenger-train car from railway power distribution systems carrying ac voltages of varying magnitude and frequency or dc voltages of 1.5 kV or 3 kV, comprising a thyristor inverter (15, 16, 17, 18, 19), operated in the case of dc voltage supply, which contains a transformer (1) from which the consumers are fed directly in the case of ac voltage supply and whose windings have means for tap changing, so that the transformer ratio can be adjusted, depending on the level of the dc supply voltage, the ac supply voltage and the frequency, to give constant output voltages for the different power consumers, characterised in that when the dc voltage supply is switched from 1.5 to 3 kV with an unchanged primary winding (W$_1$), the secondary winding part used (W$_3$ or W$_4$) is halved in length, and that the thyristor inverter features a cycle timer (20) whose pulse frequency is adjustable, being at least 50 Hz in the case of 1.5 kV dc supply and double that in the case of 3 kV dc supply.

## Revendication

Dispositif pour l'alimentation en énergie de récepteurs (2, 2a, 2b, 2c) dans une voiture ferroviaire à partir du réseau de traction alimenté en tension alternative de niveau et de fréquence différentes ou en tension continue de 1,5 kV ou 3 kV, dispositif fonctionnant avec un onduleur à thyristor (15, 16, 17, 18, 19) sous alimentation en tension continue et comprenant un transformateur (1) qui, lors d'une alimentation en tension alternative, alimente directement les récepteurs, transformateur dont les enroulements sont commutables de façon qu'un réglage du rapport de transformation du transformateur soit rendu possible suivant les différents niveaux de la tension continue d'entrée, de la tension alternative et de la fréquence pour une tension de sortie constante pour les différents récepteurs, caractérisé en ce que, lors de la commutation de l'alimentation en tension continue de 1,5 à 3 kV, tout en ayant le même enroulement primaire (W$_1$), la partie d'enroulement secondaire (W$_3$ ou W$_4$) utilisée est divisée en deux et en ce que l'onduleur à thyristor présente un générateur d'impulsions (20), dont la fréquence est réglable, la fréquence étant au moins de 50 Hz, lors d'une alimentation en tension continue de 1,5 kV et lors d'une alimentation en tension continue de 3 kV, la fréquence étant doublée par rapport à la précédente.

FIG.1

FIG. 2

FIG.3

FIG. 4

1,5 kV/50 Hz

0 053 294

FIG.5

$1kV/16\frac{2}{3}Hz$

0 053 294